# EUROPEAN PATENT SPECIFICATION

(11) **EP 2 549 890 B1**
(45) Date of publication and mention of the grant of the patent: **26.03.2014**
(21) Application number: 11702238.4
(22) Date of filing: 07.02.2011
(51) Int. Cl.: A23L 1/00, A23L 1/22, B65D 81/34

(54) **ENHANCING THE AROMA OF FOOD PRODUCTS**
VERSTÄRKUNG DES AROMAS VON LEBENSMITTELPRODUKTEN
AMÉLIORATION DE L'ARÔME DE PRODUITS ALIMENTAIRES

(30) Priority: 23.03.2010 US 316683 P
(43) Date of publication of application: 30.01.2013
(73) Proprietor: Nestec S.A., 1800 Vevey (CH)
(72) Inventor: BELZOWSKI, Marla D., Rootstown, Ohio 44272 (US); NILSSON, Urban, S-224 71 Lund (SE); SHARMA, Richa, Aurora, Ohio 44202 (US)
(74) Representative: Mollet, Beat Max
(86) International application number: PCT/EP2011/051728
(87) International publication number: WO 2011/117011

(56) References cited:
- EP-A1- 0 881 163
- EP-A1- 1 004 521
- EP-A1- 1 611 798
- EP-A2- 0 284 790
- EP-A2- 1 384 682
- WO-A1-2006/023615
- WO-A1-2007/005063
- DE-A1- 3 629 806
- GB-A- 2 198 062
- US-A- 5 523 112
- US-A1- 2009 035 414
- US-B1- 6 652 897

## Description

### FIELD OF THE INVENTION

The present invention is directed to the field of food products and food product manufacturing, and specifically provides enhanced food products comprising enhancing agents, and methods and apparatus for applying enhancing agents to food products using food-grade, controlled-droplet dispensing heads, for example, food-grade, ink-jet-type heads.

### BACKGROUND OF THE INVENTION

The appeal and perhaps even the taste of food products are enhanced by proper visual presentations, consistencies, and aromas; their nutritional contents are enhanced by preserving naturally-present nutritional components during preparation. However, food products that have been manufactured from ingredients, packaged, and then further processed during preparation, especially frozen food products, can have less appealing presentations, diminished tastes, and degraded nutritional contents. For example, re-heated, previously-frozen bread products can have unexpected and unappetizing consistencies; previously-frozen meat products that have been re-heated can lack expected aromas. Microwave ovens, which are commonly used to re-heat frozen food products, can fail to generate the surface appearances expected for conventionally cooked food. Finally, pre-packaged food products can have reduced nutritional content because naturally present nutritional elements can be leached, lost, or degraded before consumption.

For these and other reasons, pre-packaged and frozen food products available in the prior art can have diminished appeal and nutrition. It would be advantageous to endow such products with improved appearances, aromas, tastes, and nutrition that might more closely simulate the appearances, aromas, tastes, and nutrition of the original, conventionally cooked food. Preferably, such improved food products would be reliably and economically manufactured by making only minimal modifications to existing food manufacturing processes and apparatus.

It is known in the prior art to endow food products with visually-appealing decorations, images, greetings and the like by, e.g., printing onto a edible sheet or web which is then disposed on a food product such as a cake. See, e.g., US 6,329,530 B 1 or US 6,652,897 B1. Edible inks suitable for food product decoration are also known. See, e.g., 7,166,153 B2 or US 7,608,141 B2. Despite these arrangements, further improvements are necessary and desired.

### SUMMARY OF THE INVENTION

The invention provides for a method for applying an enhancing agent during food product manufacturing. In an preferred embodiment, the method comprises: 1) receiving a partially-manufactured food product ready for application of one or more enhancing agents, the food product comprising one or more packaging components or food item supporting structures; 2) activating a controlled-droplet-type dispensing head to propel droplets of an enhancing agent onto a packaging component or a food item supporting structure of the food product, the droplets being propelled in controlled numbers and sizes from nozzles in the dispensing head, the enhancing agent comprising an aroma-enhancing agent; 3) controlling the dispensing head so that the enhancing agent is applied to the food product in a selected pattern and amount; and 4) providing the food product comprising the enhancing agent for further manufacture. The food product may further comprises one or more of associated packaging components or food item supporting structures. Preferably, the enhancing agent is dispensed onto an exterior surface of the food item. More Preferably, the packaging component or food-item supporting structure further comprises active packaging selected to reach a temperature during microwave heating of the food item sufficient to cause the aroma agent to release a perceptible level of the intended aroma, and wherein the enhancing agent is dispensed onto the active packaging.

The method of the invention may further comprises activating and controlling a plurality of controlled-droplet-type dispensing heads for propelling droplets of a plurality of enhancing agents onto or into the food product in controlled numbers and sizes and in selected patterns and amounts, the enhancing agents comprising one or more aroma-enhancing agents.

In one more preferred embodiment, the enhancing agent is applied at an area-density from about 0.001 grams/cm² to about 3 grams/cm².

The invention also provides for a method for applying an aroma-enhancing agent during food product manufacturing. This method preferably comprises 1) receiving a partially-manufactured food product ready for application of one or more aroma-enhancing agents, the food product comprising one or more active packaging components or active food item supporting structures; 2) acquiring information concerning the received food product; 3) activating a controlled-droplet-type dispensing head to propel droplets of the aroma-enhancing agent onto an active packaging component of the food product or an active food item supporting structure, the droplets being propelled in controlled numbers and sizes from nozzles in the dispensing head; 4) controlling the dispensing head so that the aroma-enhancing agent is applied to the food product in a selected pattern and amount, wherein the activating and controlling are performed, at least in part, in dependence on the acquired information; and 5) providing the food product comprising the aroma-enhancing agent for further manufacturing. In one preferred embodiment, the dispensing head is activated and controlled to dispense the aroma-enhancing agent into at least a portion of the active packaging component in a substantially uniform pattern and amount. In yet another preferred embodiment, the acquired information comprises indications of the presence or absence of a food product, and the dispensing head is activated and controlled to dispense the aroma-enhancing agent only when an active packaging component is indicated to be present.

In yet another preferred embodiment, the acquired information may further comprises indications of the location and orientation of a food product, and the dispensing head is activated and controlled to dispense the aroma-enhancing agent only at the indicated location and orientation and onto the active packaging component and not beyond the active packaging component.

In yet another preferred embodiment, the acquired information comprises indications of the type of the food product, and the dispensing head is activated and controlled to dispense the aroma-enhancing agent onto the active packaging component associated with the food product in a pattern and amount selected, at least in part, in dependence on the type of the food product.

In yet another preferred embodiment, the acquired information further comprises an image of the food product, and the method further comprises matching the acquired image to one of a plurality of template images; and activating and controlling the dispensing head to apply the enhancing agent in a pattern and amount selected, at least in part, in dependence on the matching template image.

The invention further provides an apparatus for applying an aroma-enhancing agent during food product manufacturing. In a preferred embodiment, the apparatus of the invention comprises: a) a transfer means for transferring food products comprising one or more food items to and from the apparatus, food products transferred to the apparatus being ready for application of the aroma-enhancing agent, and food products transferred from the apparatus further comprising the aroma-enhancing agent; b) a controlled-droplet-type dispensing head in fluid communication with a reservoir holding the aroma-enhancing agent for propelling droplets of the aroma-enhancing agent onto an active packaging component of the food product, the droplets being propelled in controlled numbers and sizes from nozzles in the dispensing head; and c) a controller for activating and controlling the dispensing head so that the aroma-enhancing agent is applied to the food product in a selected pattern and amount.

In another preferred embodiment, the controlled-droplet-type dispensing head further comprises a food-grade ink-jet-type printer head. In yet another preferred embodiment, the apparatus of the invention further comprises a plurality of controlled-droplet-type dispensing heads in fluid communication with a plurality of reservoirs holding one or more enhancing agents for propelling droplets of the plurality of enhancing agents onto or into the food product in controlled numbers and sizes and in selected patterns and amounts, the enhancing agents comprising one or more aroma-enhancing agents. In yet another preferred embodiment, the apparatus of the invention further comprises sensors for acquiring information concerning food products transferred to the apparatus, and the controller activates and controls the dispensing heads in dependence, at least in part, on the acquired information. More preferably, the sensors further comprise an imaging device for acquiring images of transferred food products, and the controller further comprises a processor/pattern buffer for matching an acquired image with one of a plurality of template images of food products, and the controller further activates and controls the dispensing head to apply the enhancing agent in a pattern selected, at least in part, in dependence on the matching template image.

### BRIEF DESCRIPTION OF THE DRAWINGS

The present invention may be understood more fully by reference to the following detailed description of the preferred embodiment of the present invention, illustrative examples of specific embodiments of the invention and the appended figures in which:
Figs. 1A-D illustrate preferred embodiments of the food products of this invention;
Fig. 2 illustrates a preferred method of use of an enhanced food product of this invention;
Fig. 3 generally illustrates processes and apparatus of this invention;
Fig. 4 illustrates a preferred embodiment of processes and apparatus of this invention;
Fig. 5 illustrates another preferred embodiment of the processes for applying food enhancing agents; and
Fig. 6 illustrates another preferred embodiment of the processes for applying food enhancing agents.

### DETAIL DESCRIPTION OF THE PREFERRED EMBODIMENTS

The present invention provides food products with improved or enhanced verisimilitude. In other words, the improved or enhanced food products of this invention have appearances, aromas, tastes, or nutrition, and the like, that are more akin to conventionally prepared from expected ingredients (the "initial" food). The properties, namely, appearances, aromas, tastes, or nutrition, and the like, are generally known in the arts as "organoleptic" properties. Accordingly and alternatively stated, the present invention provides food products with enhanced organoleptic properties.

This invention also provides processes and apparatus for manufacturing such improved or enhanced food products, that, in preferred embodiments, can be readily integrated into existing food manufacturing processes and apparatus. According to this invention, food products are improved or enhanced by dispensing or applying onto or into the food products one or more food enhancing agents in controlled amounts and in controlled patterns. The provided manufacturing processes and apparatus perform such dispensing or applying

The term "food product" is used herein to refer generally, according to context, to an actual consumable food item, or to packaging of the consumable food item, or to both the consumable food item and its packaging. Where specificity is necessary, a consumable is specifically referred to as a "food item" and its packaging as a "packaging component"; then, a complete "food product" includes both one or more food items and one or more packaging components.

In preferred embodiments, enhancing agents are not perceptible, or only barely perceptible, prior to food-product preparation, e.g., heating and the like, by a consumer but, subsequent to preparation, endow the prepared food product with enhanced verisimilitude, that is with enhanced appearances, aromas, tastes, nutrition, or the like, expected by the consumer for the actual food when prepared. An enhancing agent is considered herein to be not perceptible by the consumer if it would not be noticed consequent to such casual inspection and handling as normally accompanies routine un-packaging and preparation of the food product. An enhancing agent is considered to be barely perceptible by the consumer if special inspections outside of the normal course of handing and preparation are required to appreciate the presence of the enhancing agent. Such inspection might include, simply, very careful observation, but often include special observation efforts the food product, e.g., observing the food product from angles or in special lighting, or altering the food product, e.g., by cutting, tearing, wetting, or the like.

In most embodiments, enhancing agents that are casually observable by the consume are less preferred. However, in certain preferred embodiments, enhancing agents may be perceptible upon removal of the food product from its packaging but only to the extent of endowing the food product prior to preparation with the enhanced appearances, aromas, tastes, nutrition, or the like, that a consumer would expect for the actual food prior to preparation. But, during food-product preparation, the perceived qualities of such enhancing agents are altered so as to endow the food product subsequent to preparation with the enhanced appearances, aromas, tastes, nutrition, or the like, that a consumer would expect for the actual food subsequent to preparation. For example, agents enhancing nutrition content can enhance a food product both prior and subsequent to preparation.

In more detail, preferred enhancing agents include or are compounded from naturally occurring ingredients, mixtures, flavorings, extracts, essences, or the like. Enhancing agents can also include artificially prepared (e.g., synthesized) compounds or mixtures. Generally, enhancing agents act to improve appearance, aroma (or other sensory qualities), or nutrition. Appearance-enhancing agents include, e.g., browning agents that, upon heating, assume a brown, cooked coloration. These agents are preferably applied or dispensed onto prepared food items (prior to packaging into a food product) in selected spatial patterns that mimic appearances of food cooked according to particular cooking methods.

Aroma-enhancing agents are agents that, upon heating, release appetizing aromas that mimic the smells of conventionally cooked food. Although these agents, if edible, can be on or in actual food items, they are preferably applied or dispensed on packaging components of a food product that are heated along with the food items. Such packaging components often include active elements for achieving higher temperatures in microwave ovens, and these higher temperatures can promote the increased release of aromas.

Nutrition-enhancing agents are preferably applied or dispensed efficiently onto or into the food product during food item preparation. Also, such dispensed nutrition-enhancing agents remain securely with the food items in a food product and not to be degraded by heating or other preparation steps. This invention is not limited to appearance, aroma, and nutrition agents, but can also encompass use of other agents that enhance food products.

Preferred manufacturing processes and apparatus apply or dispense food enhancing agents onto or into food products by, what are referred to herein as, "controlled-droplet" dispensing technologies and "controlled-droplet" dispensing apparatus (also referred to simply as "controlled-droplet dispensing heads" mimicking the term "ink-jet head"). However, this invention is not limited to the preferred "controlled-droplet" technologies to be described, but can also be practiced using alternative dispensing technologies, e.g., contact technologies in which an enhancing agent is applied by contact with a sheet or web saturated with the agent.

In more detail, "controlled-droplet" dispensing technologies and apparatus act by projecting generally large, but controlled, numbers of droplets in controlled spatial patterns onto or into selected targets, e.g., a food product. To avoid disturbance by gravity, air currents, or the like, droplets are commonly projected in jet-like streams from suitable distances with sufficient speeds and focus. Droplets preferably have sizes in the range 25-100 µm (corresponding to volumes of 10 pl to 0.5 nl) at rates in the range 2-100 kHz. Accordingly, controlled-droplet dispensing technologies can control amounts of food agent applied by dispensing a known number of droplets of a known size or volume, where the number of droplets dispensed can be controlled by dispensing droplets at a known rate for a known period of time.

Such controlled-droplet dispensing technologies have long been applied to printing text, images, and the like, where the projected jet-like streams include droplets of visible inks, dyes, or the like, and in this printing application are commonly referred to as "ink-jet printing" technologies. Because the terms 'ink jet' and "ink-jet printing" are so familiar and so widely used, the "controlled-droplet" technologies that are part of this invention are often also referred to from time-to-time herein as "ink-jet" technologies. However, despite any use of the words "ink" or "printing", it must be understood that printing with inks, dyes, or the like is not part of this invention, instead, this invention encompasses only dispensing, applying, or the like food enhancing agents that are preferably not immediately perceptible upon the food products to which they are provided.

Current well-known, reliable, and widely-available controlled-droplet dispensing technologies (ink-jet technologies) include continuous droplet technologies (having droplet production rates 80-100 kHz or greater) and on-demand droplet technologies (having droplet production rates 2-8 kHz or greater), and of the latter, the principal variants are dispensing by piezoelectric means or by thermal means.

By way of brief background, in continuous droplet technologies, droplets are formed naturally (also by ultrasonic energy) as a stream of agent issues from one or a few small nozzles, are produced continuously, i.e., whether or not applying or dispensing is needed at a particular time, and are directed by deflection means, e.g., electrostatic deflection means. If applying or dispensing to the target is needed at the particular time, droplets are deflected by the deflection means onto the target in selected patterns; but if applying or dispensing is not needed, droplets are deflected away from the target and into a catchment for catching unused agent

On-demand droplet technologies produce droplets only when commanded, i.e., only at those times when applying or dispensing is needed. Here, droplets are formed by impulsive forces in an "ink-jet printing head", and are projected from many, independently controllable nozzles available in the head. Target patterns are formed by, one or more of, independently controlling some or all of the many nozzles, moving the head and nozzle assembly with respect to the target, or moving target with respect to the head and nozzle assembly. In thermal on-demand technologies, the impulsive forces are generated by sudden short, pulses of heat which vaporize small quantities of agent (the agent being preferably water based). In piezoelectric on-demand technologies (piezo technology), the impulsive forces are generated by brief contractions and expansions of piezoelectric materials.

Preferred embodiments of the apparatus and processes of this invention apply or dispense enhancing agents by means of continuous and piezo (on-demand) controlled-droplet dispensing technologies (and also by future-developed controlled-droplet dispensing technologies with properties similar to current continuous and piezo technologies). These particular technologies are preferred because they form droplets by mechanical or fluid forces which are less likely to alter dispensed enhancing agents. In contrast, thermal controlled-droplet technologies are less preferred because heating may alter certain enhancing agents. Additionally, continuous and piezo technologies are not limited to water-based enhancing agents, as are thermal technologies.

Accordingly, for simplicity and without limitation, the following description is in terms of piezo-based controlled-droplet dispensing technologies which have printing mechanisms ("heads") comprising a plurality of independently-controllable nozzles, and which form patterns primarily by controlled activation of certain of the dispensing nozzles. Preferably, piezo (and continuous) dispensing heads are of food grade, that is they are constructed of food grade materials and configured to be cleanable so as to prevent buildup of microbial contamination.

Food grade controlled-droplet dispensing heads, e.g., in the form of ink-jet-type printer heads, are commercially available for printing recognizable patterns, such as images, text, logos and the like onto food products using with edible inks and dyes. See, e.g., Domino Printing Sciences, plc (Cambridge, UK). These heads can possibly be adapted for use in this invention, in particular, for dispensing or applying food enhancing agents in food-like or cooking-like patterns to food products. In such a case, enhancing agents are preferably compounded with edible carrier liquids (e.g., emulsifiers, vegetable oils, and the like) to form compositions having properties suitable to for use in commercial ink-jet type heads, such properties including ready formation of droplets of proper sizes, ready adherence of the point of impact on a target so as to form the intended patterns, and so forth.

Finally, it is again emphasized that, despite the use of terms "ink-jet" and "printer" in the following description, and despite the possible adaption of food-grade ink-jet printing heads for use in the apparatus of this invention, this invention does not encompass printing with inks in recognizable patterns, such as images, text, logos and the like onto food products; instead, it encompasses only dispensing or applying food enhancing agents to food products in food-like patterns, the dispensed enhancing agent being at most only barely perceptible.

The controlled-droplet dispensing apparatus (e.g., dispensing heads) is coupled to and controlled by control systems that permit selection of enhancing agent dispensing patterns according to type of food product, and permit dispensing and application according to position and orientation of the of food product thereby minimizing overspray. Such control systems receive sensor data concerning food products to be, or being, processed and, accordingly, can be configured in control arrangements known in the art. For example, in a feed forward arrangement, sensor data concerning a food product to which enhancing agents are to be applied is received by the control system prior to the arrival of the food product at the dispensing head. Once, the food product arrives at a dispensing head, its corresponding already-received sensor data is used to control the dispensing head, e.g., by predicting when and where to activate selected nozzles and when to deactivate the activated nozzles. In a feed-back arrangement, sensor data concerning a food product is received as that product is being processed, and is used when received to control the ongoing activity of the dispensing head. Control systems can also operate in a combined feed-forward and feed-back arrangement, using already received sensor data to predict dispensing head control and using as-processed sensor data to correct predictions in view of actual processing. (Less preferably, the control systems can operate in an open-loop arrangement without sensor data.)

A wide range of sensors can be used to gather data for controlling food product processing. For example, sensors can include light or mechanically sensitive electronic elements that return information primarily about the presence of food products to be processed. Such sensors can return approximate information about food product location and orientation. Image sensors, e.g., digital camera devices, collect more precise data on the presence, position, and orientation of a food product to be processed. This image data can be interpreted and control signal generated by a vision system, e.g., a computer running image recognition software that can match and recognize the images so that the dispensing of the enhancing agent can be controlled according to characteristics of the food products (when the product arrives within range of the controlled-droplet dispensing heads). Images of possible food products and instructions for applying enhancing agents to each particular type of food product can be stored on the computer's discs. Feed back information can be used for determining exactly when the dispensing heads should be activated, or for monitoring dispensing so that errors can be corrected, or the like.

Apparatus of this invention, e.g., controlled-droplet dispensing apparatus, sensors such as a camera, and controller/processor, can readily be combined into cooperatively functioning sub-systems and systems. Such sub-systems can incorporated into existing automated food product manufacturing line. Alternatively, such system can be used standalone in a restaurant kitchen or as part of a small scale food manufacturing process.

Preferred embodiments of this invention include food products comprising enhancing agents that have been applied by means of food-grade controlled-droplet dispensing apparatus (controlled-droplet dispensing heads); preferred embodiments also include apparatus and processes that apply or dispense enhancing agents on food products by means of such food-grade dispensing heads. Enhancing agents include, e.g. appearance-enhancing agents, aroma-enhancing agents, nutrition-enhancing agents, and so forth. Selected preferred embodiments are described in the following, but it should be understood that the preferred embodiment described are not limiting, and that other embodiments of this invention, e.g., those that use alternative dispensing technologies to apply or dispense these and further enhancing agents to food products are encompassed within this invention. Headings are used herein for clarity only and without any intended limitation.

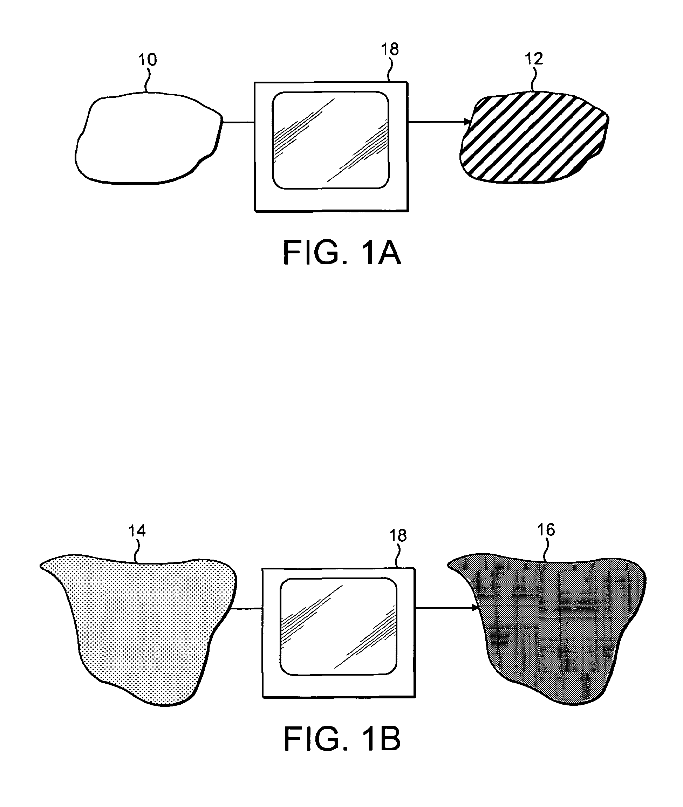

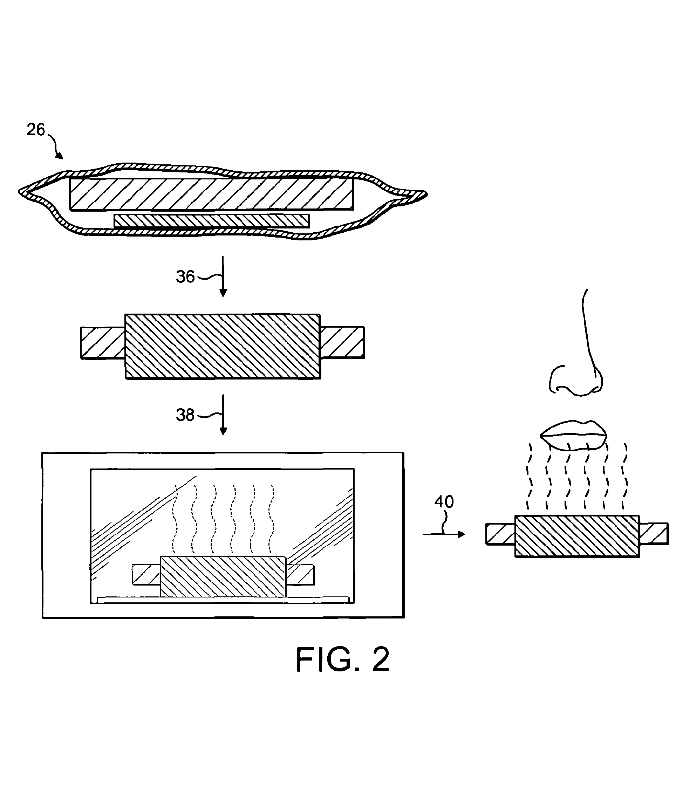

Figs. 1A-D and 2 illustrate preferred embodiments of the enhanced food products of this invention. For consistency and simplicity only, the preferred embodiments are described as comprising one or more consumable "food items", e.g., breads, meats, vegetables, and so forth, and one or more "packaging components", e.g., external packaging for in-store display or optional internal packaging for food-item preparation.

Specifically, Figs. 1A and 1B illustrate examples of food items (contained in food products) onto which appearance-enhancing agents have been applied or dispensed. These examples can represent food items containing bread or meat having browning agents applied or dispensed on their exterior surfaces in selected patterns. Browning agents are compounds and mixtures that, prior to being heated, are not prominent or even apparent on a food item, but that, subsequent to being heated, assume brownish, cooked-like colors as if the food item have been cooked on a stove top, in an oven, over coals, and the like. Browning agents known in the food industry include maltose, dextrose, MAILLOSE® (available from Red Arrow International (Manitowoc, Wisconsin)), caramel colorings, paprika oil or any other agent which imparts a browning reaction change upon heating either in a conventional oven or microwave. Such agents are also available from other food ingredient suppliers.

Food items 10 and 14 on the left in these figures are illustrated prior to heating, and accordingly, the browning agents are at most barely perceptible (and perhaps not routinely perceptibly by a consumer). Food items 12 and 16 on the right are illustrated subsequent to being heated in a microwave or conventional oven 18; and accordingly, the browning agents have acquired a cooked-like color. In particular, browning agents have been applied to food item 10 in a pattern of thin parallel stripes, so that when heated, food product 12 appears as if it had been cooked on a grill. The invention also includes other patterns that can be produced by grilling, e.g., a pattern with two sets of intersecting parallel stripes, and so forth. Browning agents have been applied to food product 14 in a more uniform manner, so that when heated, food product 16 simulates the appearance of having been roasted, or broiled, or seared, or the like. The invention includes other roasting, broiling, searing patterns in which the intensity of the browning varies in a controlled manner across the surface of the food item to appropriately simulate these further modes of cooking.

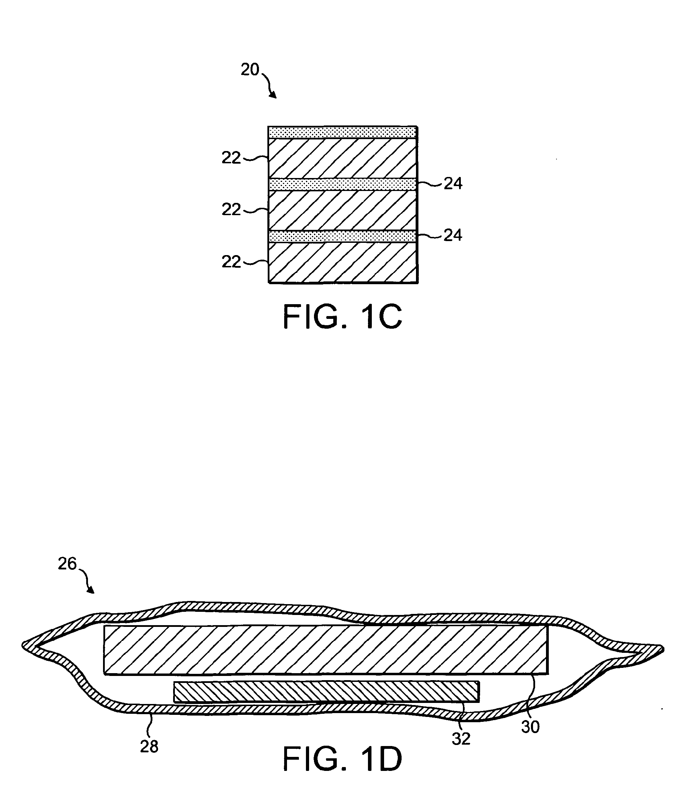

Fig. 1C illustrates an example of a nutritionally enhanced food item. Food item 20 is a composite comprising layers 22 and filler 24 between the layers. For example, food item 20 could be a lasagna-like product, in which case the filler would be lasagna noodles and the layers lasagna sauce; or the food item could be a cake, in which case the filler would be icing and the layers the cake material. One or more nutrition-enhancing agents are preferably applied or dispensed during preparation of these food items so as to be within the food item itself, and thereby substantially certain to be present, when the food item is consumed, in the originally applied or dispensed amounts. For example, nutrition-enhancing agents could be applied and dispensed between layers 22 and filler 24. The amounts of the nutritionally enhancing agents applied or dispensed are controlled to selected target levels, preferably levels consistent with regulatory compliance for any health claims made for the food product. Nutrition-enhancing agents are well known and are available from many suppliers. They include flax seed oils, Omega-3 and Omega-6 containing oils, essential fatty acids, phenols, or other food based components which would impart health benefits when applied at selected target levels to individual food items.

Fig. 1D illustrates an example of an aroma-enhanced food product 26 comprising food item 30 and outer packaging component 28 and active inner packaging component 32. Active packaging generally refers to packaging with a food item supporting structure such as a susceptor (or similar) component that, during microwave heating, interacts with the microwaves to convert microwave energy into heat energy thereby generating increased temperatures. Here, an aroma-enhancing agent has been applied to inner active packaging component 32 (preferably, its susceptor), that has been formulated to release perceptible aromas in the atmosphere especially at the higher temperatures generated by the susceptor. Aroma agents are known in the art and can include any formulation of natural or organic food quality flavors or aroma compounds releasing aromas such as would be associated with fruits, vegetables, breads, meats, dairy, sugar, chocolates, spices, nut oils, seed oils, vegetable oils or essences, and so forth. Examples of aroma agents include: yeast or bread aromas which are supplied by Givaudan (Vernier, Switzerland); grilling, roasting, or spice aromas (the latter including, e.g., natural hickory and other wood smoke aromas) available from Red Arrow.

Fig. 2 illustrates a consumer's use (i.e., preparation) of aroma-enhanced food product 26. In step 36 prior to heating, the consumer removes the outer packaging components and assembles (or places on, or the like) food item 30 with inner active packaging 32. One or more aroma-enhancing agents have been applied to active packaging 32, so that in step 38, when the food item is heated in a microwave oven along with the active packaging, the temperatures generated by the susceptor portion of the active packaging cause the aroma agent to release perceptible levels of aroma.

Although in this example embodiment, aroma-enhancing agents are applied to a packaging component, e.g., an active packing component, the invention is not so limited. In other embodiments, the aroma-enhancing agents can be applied or dispensed onto an edible food product, ex., chicken, beef, fish, pork, vegetable, fruit, bread, dough, or other food substance either in a cooked IQF (individually quick frozen) state, a partially cooked state, or an ambient or raw state.

The invention is not limited to the application or dispensing of a single enhancing agent onto a food product, but in further preferred embodiments, multiple enhancing agents can be applied to a single food product. For example, a browning agent can be applied to a food item and an aroma agent can be applied to active packaging for the food item. Also, aroma and/or browning agents can be applied to a food product that also includes nutrition-enhancing agents. Further, a product can comprise multiple agents of a single type, e.g., two or more nutrition or aroma enhancing agents. One of ordinary skill will appreciate further such combinations, and such combinations are within the scope of the invention.

This invention also includes apparatus and processes that apply or dispense enhancing agents on food products by means of food-grade, controlled droplet dispensing heads (for example, food-grade, ink-jet print heads adapted, if necessary, to dispense combinations containing enhancing agents).

Embodiments of such apparatus and processes are expected to be incorporated as additions or improvements into known apparatus and processes already used for manufacture of food products from supplied materials. For convenience but without limitation, food product manufacturing processes are described herein as a separate number of process steps, and food product manufacturing apparatus are described as a number of separate sub-systems (also referred to as process "stations") with each sub-system receiving partially prepared food products from a previous sub-system, performing at least one process step, and transferring the food products to the next sub-system. The sub-system, thus, form a manufacturing "line", with food products being transferred between stations by transfer devices such as conveyors, robot arms, and the like. In this context, this invention's apparatus and processes are described as a separate sub-system, or station, which receives from prior stations (if any) partially manufactured food products ready for application of enhancing agents, which applies or dispenses enhancing agents according to this invention, and which transfers to subsequent stations (if any) the partially manufactured food products with enhancing agents.

However, this invention is not limited to such food product manufacturing processes, and in alternative embodiments, the apparatus and processes of this invention can be used as a standalone system. Such a standalone embodiment would be useful in restaurant kitchens, in small-scale food services, or in the like. In such smaller scale application, food items could be transferred by hand to and from the system for application or dispensing of enhancing agents.

Apparatus of the invention applies enhancing agents to food products by dispensing the agents with one or more controlled-droplet dispensing heads, with thermal type dispensing technologies being less preferred than piezoelectric (piezo) or continuous (ultrasonic) type dispensing technologies. In the following but without limitation, the invention is described in terms of multiple nozzle, piezo-type, controlled-droplet dispensing heads. The preferred piezo dispensing heads used in the invention are preferably made of food grade materials that will not degrade or react with the enhancing agents to be applied. Food-grade, ink-jet heads that are commercially available for printing text, patterns, and the like on food products with edible, visible inks, can be adapted for use in this invention with at least certain enhancing agents (i.e., those that have sufficiently ink-like fluid properties including viscosity, surface tension, and the like).

Enhancing agents are preferably compounded with carrier fluids selected to foster proper droplet formation and properties and, if possible, to be compatible with existing food-grade, ink-jet printing heads. If enhancing agents are already supplied with carrier fluids, the as-supplied carrier fluid component could require modifications to foster such proper droplet formation. Further, enhancing agents, e.g., aroma, flavoring, browning, nutritional and similar enhancing agents and compounds, are preferably applied to food products in controlled amounts, e.g., in area concentrations from about 3 grams/cm² down to about 0.001 grams/cm² and more preferably from about 2 grams/cm² down to about 0.005 grams/cm². Further, enhancing agents are applied in selected surface patterns preferably chosen to promote the intended effects of the enhancing agents, e.g., aroma agents are applied in areas and patterns so as to promote release of aromas during heating; browning agents so as to generate controlled, patterned browning effects during heating, e.g., appearing as the food product had been grilled, roasted, seared, and the like; nutritional agents so as to be properly incorporated into a food product and not degraded during heating; and so forth.

Achievable coverage areas and patterns are generally determined principally by the spray patterns that can be achieved with the available dispensing head (ex., by individually controlling or activating the multiple nozzles). Although coverage areas and patterns can be expanded by providing means for the dispensing head and the target food items to be moved with respect to each other, expanded areas and patterns are preferably achieved by providing multiple dispensing heads that can be used to apply or dispense concurrently onto a single food product. Multiple heads can also apply multiple different enhancing agents, e.g., applying a browning agent to the surface of the product's food item and an aroma agent to the product's (active) packaging.

The controlled-droplet dispensing head or heads are preferably controlled and targeted (e.g., by controlling which nozzles to activate and when to activate those nozzles) by control systems that respond to sensor information characterizing food products (food items and/or packaging components) so that enhancing agents can be more accurately applied or dispensed and so that overspray, i.e., outside of the target area or beyond the food item, can be further minimized. Overspray can release enhancing agents into the ambient environment, and thereby lead to unintended environmental effects, such as the health impairment of nearby workers who could breathe excess enhancing agents. Overspray is known to occur from time-to-time with conventional spray or atomization systems.

Such sensor information can be of a feed-forward nature characterizing a food product prior to actual applying or dispensing, for example by representing its type, its position and orientation with respect to the dispensing head (or heads), and so forth. Alternatively, sensor information can also be of a feed back nature obtained by sensors during applying or dispensing. Feed forward information can be used by the control system apply or dispense one or more enhancing agents according to the type of the food product, and also according to its position and orientation (ex., so as to minimize overspray). Feed back information can by used by the control system to prevent or correct processing mistakes, errors, and the like.

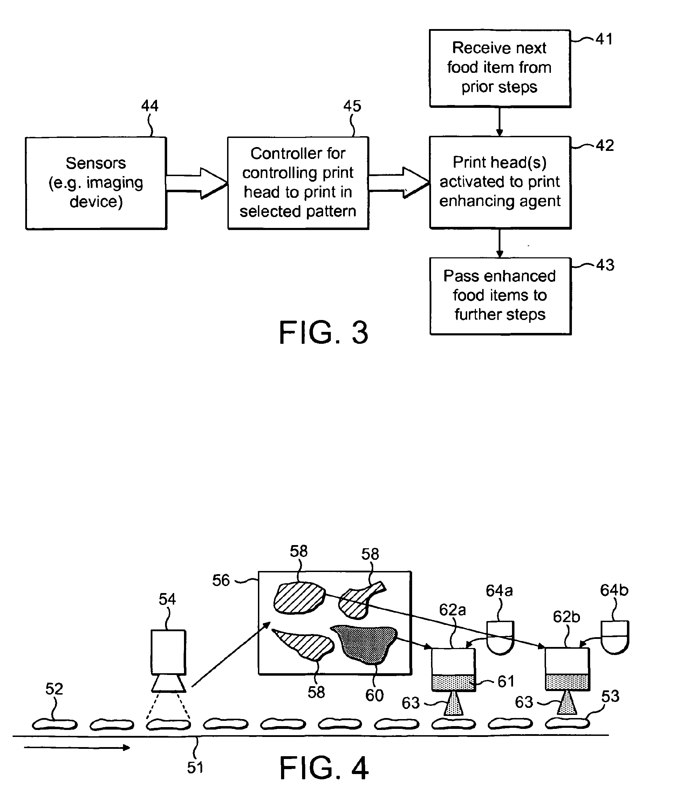

Fig. 3 illustrates the general characteristics of the apparatus and processes of this invention. Here, solid arrows indicate flow of food products and open arrows indicate flow of information concerning food products. Processing of a next food product begins when the apparatus receives 41 the food item from, e.g., previous manufacturing steps or stations. Sensors 44 detect, at least, the presence or absence of this next food product in the vicinity of the controlled-droplet dispensing head heads 42, and preferably also provides further information concerning the food product such as its type, position, orientation, and so forth. In dependence, at least in part, on this sensor information, controller 45 activates and controls 42 the dispensing head to dispense the enhancing agent (or agents) on the food product, e.g., on its contained food item or on the food item's packaging. When dispensing is complete, the thereby enhanced food product is passed 43 to further manufacturing steps or stations.

Sensors 44 include, imaging sensors such as camera. Control systems 45 can include a computing device, which in one embodiment is programmable, has local and long term memory and input/output interfaces. Input interfaces can be for receiving sensor information useful for feed forward or feed back control, while output interfaces can be for transmitting signals for controlling the dispensing heads and other components of the apparatus. Information and commands directed to and from an operator can also be exchanged across the I/O interfaces. Programs for operating the control system can be stored in long term memory and be retrieved into short term memory for execution by the programmable device. Specifically, the control systems can be implemented as a specialized, embedded controller, or by a suitably configured PC-type or a server-type computer.

The sensors include cameras (and other light sensitive devices) that provide images of food products, and, at least part of the stored programs implement a vision system that performs food-product image recognition and control-signal generation based on the recognized images. Such industrial vision systems and programs are known and commercially available in the art.

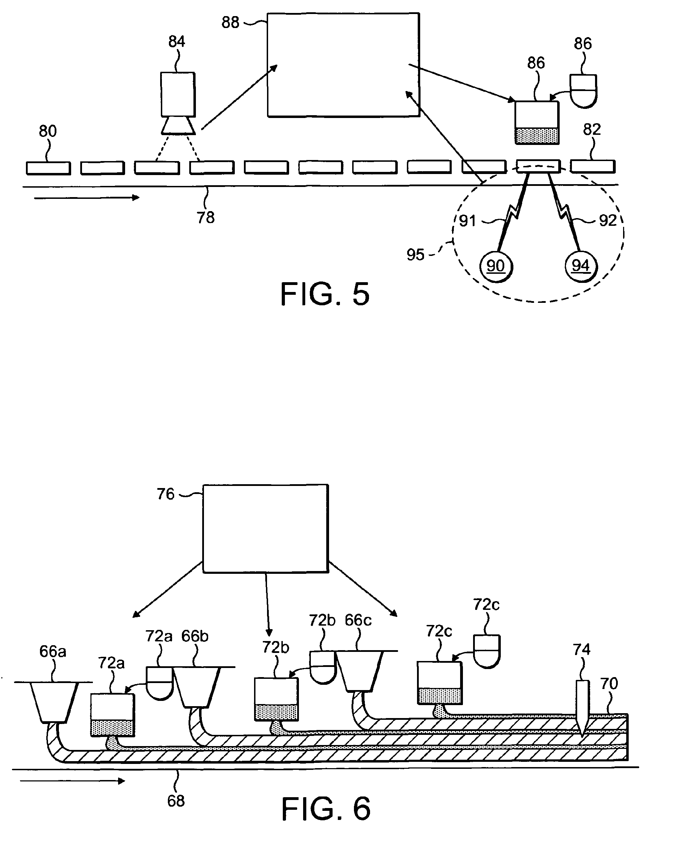

Next, specific embodiments of the processes and apparatus of Fig. 3 are described with respect to Figs. 4-6, where: Fig. 4 illustrates patterned dispensing of an enhancing agent (or agents) onto an already prepared food item; Fig. 5 illustrates dispensing of an enhancing agent (or agents) onto a packaging component, and Fig. 6 illustrates dispensing of an enhancing agent (or agents) onto a food item during preparation. In these figures, a conveyor transfers food products to and from the processing station of the present invention, stations prior or subsequent to the station of the present invention are not illustrated. Alternatively, the apparatus of this invention could be configured for standalone use in, e.g., a restaurant kitchen where products are manually transferred.

In more detail, Fig. 4 illustrates applying or dispensing browning agents onto food items 52 passing along conveyor (or other transport mechanism) 50. The food items might contain, e.g., bread, meat, of other ingredient. Control system 56 comprises a processor and a pattern buffer which operates in a feed forward fashion. Sensors comprise camera 54 which acquires images of an approaching (or a "next") food items and transfers the acquired images to control system buffers. Control system processor, executing image recognition software (equivalently, the processor and software form a "vision system"), matches acquired images with image templates of expected types of food items, retrieves particular enhancing agents and particular enhancing agent patterns associated with the templates from storage, and generates and outputs control signals to cause the dispensing heads to apply or dispense the particular enhancing agent in the particular patterns when the matched food item arrives within range of the dispensing heads. Here, the pattern associated with a particular template is illustrated as overlaying the template; in operation, however, images received for matching would not have patterns, as such patterns appear only after dispensing and heating.

In more detail, three templates 58 indicate grilled food items and are associated with a first browning agent (in reservoir 64a) and with patterns mimicking grill marks; template 60 indicates a broiled/roasted/seared food item and is associated with a second browning agent (in reservoir 64b) and with a more uniform pattern mimicking the results of broiling/roasting/searing. The illustrated apparatus includes two dispensing heads 62a and 62b which comprise pluralities of nozzles 61 that can be individually and independently controlled to apply or dispense, the dispensing heads being supplied with the first and second browning agents, respectively, from storage reservoirs 64a and 64b (in the following, a dispensing head coupled to an agent reservoir is referred to as a "dispensing-head-reservoir assembly"). Stippling 63 illustrates droplets generated by activated nozzles.

An approaching grilled-type food item will be imaged by camera 54 and matched to one of the stored templates 58, and when this item moves within range, dispensing head 62a will be activated and controlled by processor/image buffer 56 to apply or dispense the browning agent in reservoir 64a in the associated grill-like pattern. In the absence of further sensor information (e.g., feedback information), dispensing head 62a is activated at a fixed time (depending on conveyor speed) after the food item is imaged. Similarly, an approaching broiled/roasted/seared-type food item will be imaged and matched to template 60, and when this item moves within range, dispensing head 62b will be activated and controlled by the processor/image buffer to apply or dispense the browning agent in reservoir 64b in the associated pattern. Again, in the absence of further sensor information, dispensing head 62b is activated at a fixed time (depending on conveyor speed) after the food item is imaged. Since the sizes and shapes of the food items have been determined prior to dispensing (feed forward mode), the browning agent can be applied and dispensed only to the food item with minimal overspray onto the conveyor or into the environment. Food item 53 with applied browning agents then passes on for use or further manufacturing.

In further embodiments, the apparatus of Fig. 4 can be configured to dispense a single browning agent in different patterns selected according to different types of food items, or to dispense three or more different browning agents, or to dispense a single browning agent along with another enhancing agent, e.g., an aroma agent or a nutritional agent. Further, additional feed back sensor information can be supplied (feed back mode) to the control system that indicates when a particular food item has actually arrived within range of a dispensing head (regardless of changes in conveyor speed).

Fig. 5 illustrates applying or dispensing an aroma enhancing agent to packaging components 80, e.g., active, inner packaging components, passing along conveyor 78. Here, because there is only a single type of packaging component of standardize size is transferred along by the conveyor, and because the aroma agent is applied to the packaging component in a fixed pattern, camera 84 and processor 88 need only recognize the presence or absence of a packaging component passing along the conveyor and then activate dispensing-head-reservoir assembly 86 when the recognized packaging component is in the range of the dispensing head. Accordingly, the aroma agent will be applied only to the packaging without waste or overspray. The apparatus of Fig. 4 can be used to dispense an enhancing agent onto a single type of standardized food component passing along the conveyor.

Instead of or in additional to this feed forward control, the apparatus can also include sensors useful for feed back control for, e.g., sensing when the packaging component has actually arrived at dispensing-head/reservoir assembly 86. Exemplary optical-type sensors are illustrated within oval bubble 95 and include light source 90 and light sensor 94. When a packaging component has arrived and is within range of dispensing-head-reservoir assembly 86, light beam 91 will illuminate this packaging component, and sensor 94 will respond to this illumination generating a presence signal arrival. Processor 88 can then activate the dispensing head. in dependence on this presence signal. Food item 52 with applied aroma-enhancing agent then passes on for use or further manufacturing.

Finally, Fig. 6 illustrates applying a nutritional agent during the preparation of food item 70. This food item is prepared by extruding dough, filling, or the like into a continuous, multi-layer band or ribbon, and by transferring the continuous band or ribbon by conveyor 68 to cutting device 74 which divides or cuts the continuous band or ribbon into portions for packaging. For example, such a food item could comprise a bread-type item in which case extruders 66a, 66b, and 66c extrude different layers of a dough; or could comprise a filled-type food item in which case extruders 66a and 66c serve to extrude top and bottom dough layers while extruder 66b extrudes a filling layer; or could comprise a cake-type food component in which case extruders 66a and 66b extrude layers of the cake while extruder 66c extrudes an icing.

Dispensing-head-reservoir assemblies 72a, 72b, and 72c apply enhancing agents to the surface of each extruded layer in turn.. For example, all these assemblies could apply one or more nutrition agents; or assemblies 72a and 72b could apply one or more nutrition agents while assembly 72c could apply a browning agent in case the food item were baked (and would be enhanced by assuming a baked appearance upon heating); and so forth.

Processor/controller 76 controls the extruders to provide continuous bands or ribbons, and also controls the dispensing-head-reservoir assemblies to apply or dispense proper amounts of enhancing agents. Preferably, each pair of extruder and dispensing-head assembly (e.g., pairs 66a and 72a, and 66b and 72b, and 66c and 72c) is controlled so that the rates of extrusion and of enhancing agent application are approximately proportional in order that the intended amount of enhancing agent is applied per unit area regardless whether the layer is being more rapidly or more slowly extruded. The enhancing agent can be dispensed continuously or intermittently but periodically.

Advantageously but not illustrated, the processor/controller receives sensor information concerning the processes being controlled. For example, the process/controller can use feed back information concerning the actual thickness and/or speed of an extruded layer so that the rate of enhancing-agent dispensing can controlled to ensure a proper ratio of enhancing to the extruded layer. Alternatively, the process/controller can use feed forward information (from an imaging or vision system) concerning the integrity of an extruded layer so that, in the case of gaps or breaks in the extruded layer, enhancing-agent dispensing can be interrupted to avoid applying or dispensing onto the conveyor or into the environment.

In further preferred embodiments, a single manufacturing line can incorporate two of more of the apparatus and processes illustrated in Figs. 4-6. For example, a browning agent can be applied or dispensed on a food item according to Fig. 4, and the enhanced food item can be packaged in a package component with an aroma agent applied according to Fig. 5. Alternatively, a browning agent can be applied or dispensed according to Fig. 4 to a multi-layer food item prepared according to Fig. 6. One of ordinary skill will appreciate that further such combinations are within the scope of the invention.

## Claims

1. A method for applying an enhancing agent during food product manufacturing which comprises:
receiving a partially-manufactured food product ready for application of one or more enhancing agents, the food product comprising one or more packaging components or food item supporting structures;
acquiring information concerning the received food product; activating a controlled-droplet-type dispensing head to propel droplets of an enhancing agent onto a packaging component or a food item supporting structure of the food product, the droplets being propelled in controlled numbers and sizes from nozzles in the dispensing head, the enhancing agent comprising a aroma-enhancing agent;
controlling the dispensing head so that the enhancing agent is applied to the food product in a selected pattern and amount;
wherein the activating and controlling are performed, at least in part, in dependence on the acquired information, and
providing the food product comprising the enhancing agent for further manufacturing,
wherein the acquired information further comprises an image of the food product, and further comprising:
matching the acquired image to one of a plurality of template images; and
activating and controlling the dispensing head to apply the enhancing agent in a pattern and amount selected, at least in part, in dependence on the matching template image.

2. The method of claim 1 wherein the food product further comprises one or more food items, and wherein the enhancing agent is dispensed also onto a food item.

3. The method of claim 1 wherein the packaging component or food-item supporting structure further comprises active packaging selected to reach a temperature during microwave heating of the food item sufficient to cause the aroma agent to release a perceptible level of the intended aroma, and wherein the enhancing agent is dispensed onto the active packaging.

4. The method of claim 1 further comprising activating and controlling a plurality of controlled-droplet-type dispensing heads for propelling droplets of a plurality of enhancing agents onto or into the food product in controlled numbers and sizes and in selected patterns and amounts, the enhancing agents comprising one or more aroma-enhancing agents.

5. The method of claim 1 wherein the enhancing agent is applied at an area-density from about 0.001 grams/cm² to about 3 grams/cm².

6. The method of claim 1 wherein the dispensing head is activated and controlled to dispense the aroma-enhancing agent into at least a portion of the active packaging component in a substantially uniform pattern and amount.

7. The method of claim 1 wherein the acquired information comprises indications of the presence or absence of a food product, and wherein the dispensing head is activated and controlled to dispense the aroma-enhancing agent only when an active packaging component is indicated to be present.

8. The method of claim 1 wherein the acquired information further comprises indications of the location and orientation of a food product, and wherein the dispensing head is activated and controlled to dispense the aroma-enhancing agent only at the indicated location and orientation and onto the active packaging component and not beyond the active packaging component.

9. The method of claim 1 wherein the acquired information comprises indications of the type of the food product, and wherein the dispensing head is activated and controlled to dispense the aroma-enhancing agent onto the active packaging component associated with the food product in a pattern and amount selected, at least in part, in dependence on the type of the food product.

10. An apparatus for applying an aroma-enhancing agent during food product manufacturing which comprises:
a transfer means for transferring food products comprising one or more food items to and from the apparatus, food products transferred to the apparatus being ready for application of the aroma-enhancing agent, and food products transferred from the apparatus further comprising the aroma-enhancing agent;
a controlled-droplet-type dispensing head in fluid communication with a reservoir holding the aroma-enhancing agent for propelling droplets of the aroma-enhancing agent onto an active packaging component of the food product, the droplets being propelled in controlled numbers and sizes from nozzles in the dispensing head; and
a controller for activating and controlling the dispensing head so that the aroma-enhancing agent is applied to the food product in a selected pattern and amount,
wherein said apparatus is further comprising sensors for acquiring information concerning food products transferred to the apparatus; and wherein the controller activates and controls the dispensing heads in dependence, at least in part, on the acquired information,
wherein the sensors further comprise an imaging device for acquiring images of transferred food products, and the controller further comprises a processor/pattern buffer for matching an acquired image with one of a plurality of template images of food products, and the controller further activates and controls the dispensing head to apply the enhancing agent in a pattern selected, at least in part, in dependence on the matching template image.

11. The apparatus of claim 10 wherein the controlled-droplet-type dispensing head further comprises a food-grade ink-jet-type printer head.

12. The apparatus of claim 10 further comprising a plurality of controlled-droplet-type dispensing heads in fluid communication with a plurality of reservoirs holding one or more enhancing agents for propelling droplets of the plurality of enhancing agents onto or into the food product in controlled numbers and sizes and in selected patterns and amounts, the enhancing agents comprising one or more aroma-enhancing agents.

## Patentansprüche

1. Verfahren zum Aufbringen eines Verstärkungsmittels während der Nahrungsmittelproduktherstellung, das Folgendes umfasst:
Aufnehmen eines teilweise hergestellten Nahrungsmittelproduktes, das zur Aufbringung von einem oder mehreren Verstärkungsmitteln bereit ist, wobei das Nahrungsmittelprodukt einen oder mehrere Verpackungsbestandteile oder Trägerstrukturen für Nahrungsartikel aufweist;
Erfassen von Informationen bezüglich des aufgenommenen Nahrungsmittelproduktes; Betätigen eines kontrollierten Tröpfchenabgabekopfes, um Tröpfchen eines Verstärkungsmittels auf einen Verpackungsbestandteil oder eine Trägerstruktur eines Nahrungsartikels des Nahrungsmittelproduktes auszustoßen, wobei die Tröpfchen in kontrollierter Anzahl und Größe aus Düsen in dem Abgabekopf ausgestoßen werden, wobei das Verstärkungsmittel einen Aromaverstärker enthält;
Steuern des Abgabekopfes derart, dass das Verstärkungsmittel in einem ausgewählten Muster und ausgewählter Menge auf das Nahrungsmittelprodukt aufgebracht wird;
wobei das Betätigen und Steuern zumindest teilweise in Abhängigkeit der erfassten Informationen erfolgt, und
Bereitstellen des Nahrungsmittelproduktes mit dem Verstärkungsmittel zur weiteren Herstellung,
wobei die erfassten Informationen weiterhin ein Bild des Nahrungsmittelproduktes enthalten, sowie weiterhin mit den Schritten:
Abstimmen des erfassten Bildes auf eines von mehreren Vorlagenbildern; sowie
Betätigen und Steuern des Abgabekopfes, um das Verstärkungsmittel in einem Muster und einer Menge aufzubringen, welche zumindest teilweise in Abhängigkeit des angepassten Vorlagenbildes ausgewählt sind.

2. Verfahren gemäß Anspruch 1, wobei das Nahrungsmittelprodukt weiterhin einen oder mehrere Nahrungsartikel umfasst und wobei das Verstärkungsmittel auch auf einen Nahrungsartikel abgegeben wird.

3. Verfahren gemäß Anspruch 1, wobei der Verpackungsbestandteil oder die Trägerstruktur des Nahrungsartikels außerdem eine aktive Verpackung umfasst, die ausgewählt ist, um während des Mikrowellenerhitzens des Nahrungsartikels eine Temperatur zu erreichen, die ausreicht, um das Aromamittel zur Freisetzung eines merklichen Gehalts des beabsichtigten Aromas zu veranlassen, und wobei das Verstärkungsmittel auf die aktive Verpackung abgegeben wird.

4. Verfahren gemäß Anspruch 1, weiterhin mit dem Schritt des Betätigens und Steuerns von mehreren kontrollierten Tröpfchenabgabeköpfen, um Tröpfchen von mehreren Verstärkungsmitteln auf oder in das Nahrungsmittelprodukt in kontrollierter Anzahl und Größe sowie in ausgewählten Mustern und Mengen aufzubringen, wobei die Verstärkungsmittel einen oder mehrere Aromaverstärker enthalten.

5. Verfahren gemäß Anspruch 1, wobei das Verstärkungsmittel in einer Flächendichte von ca. 0,001 g/cm² bis ca. 3 g/cm² aufgebracht wird.

6. Verfahren gemäß Anspruch 1, wobei der Abgabekopf zur Abgabe des Aromaverstärkers in mindestens einen Teil des aktiven Verpackungsbestandteils in einem im Wesentlichen gleichmäßigen Muster und gleichmäßiger Menge betätigt und gesteuert wird.

7. Verfahren gemäß Anspruch 1, wobei die erfassten Informationen Angaben des Vorliegens oder Nichtvorliegens eines Nahrungsmittelproduktes umfassen, und wobei der Abgabekopf so betätigt und gesteuert wird, dass er den Aromaverstärker nur abgibt, wenn angezeigt wird, dass ein aktiver Verpackungsbestandteil vorliegt.

8. Verfahren gemäß Anspruch 1, wobei die erfassten Informationen Angaben über die Lage und Ausrichtung eines Nahrungsmittelproduktes umfassen, und wobei der Abgabekopf so betätigt und gesteuert wird, dass er den Aromaverstärker nur in der angegebenen Lage und Ausrichtung und auf den aktiven Verpackungsbestandteil und nicht außerhalb des aktiven Verpackungsbestandteils abgibt.

9. Verfahren gemäß Anspruch 1, wobei die erfassten Informationen Angaben über die Art des Nahrungsmittelproduktes enthalten, und wobei der Abgabekopf so betätigt und gesteuert wird, dass er den Aromaverstärker auf den dem Nahrungsmittelprodukt zugeordneten, aktiven Verpackungsbestandteil in einem Muster und einer Menge abgibt, welche zumindest teilweise in Abhängigkeit von der Art des Nahrungsmittelproduktes ausgewählt sind.

10. Vorrichtung zum Aufbringen eines Aromaverstärkers während der Nahrungsmittelproduktherstellung, mit:
einer Übertragungseinrichtung zum Übertragen von Nahrungsmittelprodukten mit einem oder mehreren Nahrungsartikeln auf die und von der Vorrichtung,
wobei auf die Vorrichtung übertragene Nahrungsmittelprodukte zum Aufbringen des Aromaverstärkers bereit sind und von der Vorrichtung übertragene Nahrungsmittel weiterhin den Aromaverstärker enthalten;
einem kontrollierten Tröpfchenabgabekopf in Fließverbindung mit einem den Aromaverstärker enthaltenden Behälter zum Ausstoßen von Tröpfchen des Aromaverstärkers auf einen aktiven Verpackungsbestandteil des Nahrungsmittelproduktes, wobei die Tröpfchen in kontrollierter Anzahl und
Größe aus Düsen in dem Abgabekopf ausgestoßen werden; sowie einer Steuerung zum Betätigen und Steuern des Abgabekopfes derart, dass der Aromaverstärker auf das Nahrungsmittelprodukt in einem ausgewählten Muster und ausgewählter Menge aufgebracht wird, wobei die Vorrichtung weiterhin Sensoren zum Erfassen von Informationen bezüglich auf die Vorrichtung übertragenen Nahrungsmittelprodukten umfasst; und wobei die Steuerung die Abgabeköpfe zumindest teilweise in Abhängigkeit von den erfassten Informationen betätigt und steuert,
wobei die Sensoren weiterhin eine Abbildungsvorrichtung zur Erfassung von Bildern von übertragenen Nahrungsmittelprodukten umfassen, und die Steuerung weiterhin einen Prozessor/Musterzwischenspeicher zum Abstimmen eines erfassten Bildes auf eines von mehreren Vorlagenbildern von Nahrungsmittelprodukten umfasst, und die Steuerung außerdem den Abgabekopf so betätigt und steuert, dass das Verstärkungsmittel in einem zumindest teilweise in Abhängigkeit des passenden Vorlagenbildes ausgewählten Muster aufgebracht wird.

11. Vorrichtung gemäß Anspruch 10, wobei der kontrollierte Tröpfchenabgabekopf weiterhin einen Tintenstrahldruckkopf in Lebensmittelqualität umfasst.

12. Vorrichtung gemäß Anspruch 10, weiterhin mit mehreren kontrollierten Tröpfchenabgabeköpfen in Fließverbindung mit mehreren Behältern, die ein oder mehrere Verstärkungsmittel enthalten, um Tröpfchen der mehreren Verstärkungsmittel auf oder in das Nahrungsmittelprodukt in kontrollierter Anzahl und Größe und in ausgewählten Mustern und Mengen auszustoßen, wobei die Verstärkungsmittel einen oder mehrere Aromaverstärker enthalten.

## Revendications

1. Procédé pour appliquer un agent d'amélioration au cours de la fabrication de produit alimentaire, qui comprend les étapes :
recevoir un produit alimentaire partiellement fabriqué qui est prêt pour l'application d'un ou plusieurs agents d'amélioration, le produit alimentaire comprenant un ou plusieurs composants d'emballage ou structures de support d'article alimentaire ;
acquérir des informations concernant le produit alimentaire reçu ; activer une tête de distribution de gouttelettes commandée pour propulser des gouttelettes d'un agent d'amélioration sur un composant d'emballage ou une structure de support d'article alimentaire du produit alimentaire, les gouttelettes étant propulsées en nombre et taille contrôlés depuis des buses dans la tête de distribution, l'agent d'amélioration comprenant un agent d'amélioration d'arôme ;
commander la tête de distribution de sorte que l'agent d'amélioration est appliqué au produit alimentaire selon un motif et une quantité sélectionnés ;
dans lequel l'activation et la commande sont réalisées, au moins en partie, en fonction des informations acquises, et
fournir le produit alimentaire comprenant l'agent d'amélioration pour une fabrication supplémentaire,
dans lequel les informations acquises comprennent en outre une image du produit alimentaire,
et comprenant en outre les étapes :
faire correspondre l'image acquise à une ou à une pluralité d'images modèles ; et
activer et commander la tête de distribution afin d'appliquer l'agent d'amélioration selon un motif et une quantité sélectionnés, au moins en partie, en fonction de l'image modèle correspondante.

2. Procédé selon la revendication 1, dans lequel le produit alimentaire comprend en outre un ou plusieurs articles alimentaires, et dans lequel l'agent d'amélioration est également distribué sur un article alimentaire.

3. Procédé selon la revendication 1, dans lequel le composant d'emballage ou la structure de support d'article alimentaire comprend en outre un emballage actif sélectionné pour atteindre au cours d'un chauffage par micro-onde de l'article alimentaire une température suffisante pour amener l'agent d'arôme à libérer un niveau perceptible de l'arôme prévu, et dans lequel l'agent d'amélioration est distribué sur l'emballage actif.

4. Procédé selon la revendication 1, comprenant en outre l'activation et la commande d'une pluralité de têtes de distribution de gouttelettes commandées pour propulser des gouttelettes d'une pluralité d'agents d'amélioration sur ou dans le produit alimentaire en nombre et taille contrôlés et selon des motifs et quantités sélectionnés, les agents d'amélioration comprenant un ou plusieurs agents d'amélioration d'arôme.

5. Procédé selon la revendication 1, dans lequel l'agent d'amélioration est appliqué selon une densité surfacique d'environ 0,001 grammes/cm² à environ 3 grammes/cm².

6. Procédé selon la revendication 1, dans lequel la tête de distribution est activée et commandée pour distribuer l'agent d'amélioration d'arôme dans au moins une partie du composant d'emballage actif selon un motif et une quantité sensiblement uniformes.

7. Procédé selon la revendication 1, dans lequel les informations acquises comprennent des indications sur la présence ou l'absence d'un produit alimentaire, et dans lequel la tête de distribution est activée et commandée pour distribuer l'agent d'amélioration d'arôme uniquement quand il est indiqué qu'un composant d'emballage actif est présent.

8. Procédé selon la revendication 1, dans lequel les informations acquises comprennent en outre des indications sur l'emplacement et l'orientation d'un produit alimentaire, et dans lequel la tête de distribution est activée et commandée pour distribuer l'agent d'amélioration d'arôme uniquement à l'emplacement et dans l'orientation indiqués et sur le composant d'emballage actif et non au-delà du composant d'emballage actif.

9. Procédé selon la revendication 1, dans lequel les informations acquises comprennent des indications sur le type du produit alimentaire, dans lequel la tête de distribution est activée et commandée pour distribuer l'agent d'amélioration d'arôme sur le composant d'emballage actif associé au produit alimentaire selon un motif et une quantité sélectionnés, au moins en partie, en fonction du type du produit alimentaire.

10. Appareil pour appliquer un agent d'amélioration d'arôme au cours de la fabrication de produit alimentaire, qui comprend :
un moyen de transfert pour transférer à et depuis l'appareil des produits alimentaires comprenant un ou plusieurs articles alimentaires, les produits alimentaires transférés à l'appareil étant prêts pour l'application de l'agent d'amélioration d'arôme, et les produits alimentaires transférés depuis l'appareil comprennent en outre l'agent d'amélioration d' arôme ;
une tête de distribution de gouttelettes commandée qui est en communication de fluide avec un réservoir contenant l'agent d'amélioration d'arôme pour propulser des gouttelettes de l'agent d'amélioration d'arôme sur le composant d'emballage actif du produit alimentaire, les gouttelettes étant propulsées en nombre et taille contrôlés depuis des buses dans la tête de distribution ; et
un dispositif de commande pour activer et commander la tête de distribution de sorte que l'agent d'amélioration d'arôme est appliqué au produit alimentaire selon un motif et une quantité sélectionnés,
ledit appareil comprenant en outre des capteurs pour l'acquisition d'informations concernant les produits alimentaires transférés à l'appareil ; et dans lequel le dispositif de commande active et commande les têtes de distribution en fonction, au moins en partie, des informations acquises,
dans lequel les capteurs comprennent en outre un dispositif d'imagerie pour acquérir des images de produits alimentaires transférés, et le dispositif de commande comprenant en outre un processeur/une mémoire tampon pour motifs afin de faire correspondre une image acquise avec l'une d'une pluralité d'images modèles de produits alimentaires, et le dispositif de commande activant et commandant en outre la tête de distribution pour appliquer l'agent d'amélioration selon un motif sélectionné, au moins en partie, en fonction de l'image modèle correspondante.

11. Appareil selon la revendication 10, dans lequel la tête de distribution de gouttelettes commandée comprend en outre une tête d'imprimante à jet d'encre de qualité alimentaire.

12. Appareil selon la revendication 10, comprenant en outre une pluralité de têtes de distribution de gouttelettes commandées en communication de fluide avec une pluralité de réservoirs contenant un ou plusieurs agents d'amélioration pour propulser des gouttelettes de la pluralité des agents d'amélioration sur ou dans le produit alimentaire en nombre et en taille contrôlés et selon des motifs et quantités sélectionnés, les agents d'amélioration comprenant un ou plusieurs agents d'amélioration d'arôme.
